# EUROPÄISCHE PATENTSCHRIFT

(11) **EP 2 229 348 B1**
(45) Veröffentlichungstag und Bekanntmachung des Hinweises auf die Patenterteilung: **11.03.2015**
(21) Anmeldenummer: 08860124.0
(22) Anmeldetag: 03.12.2008
(51) Int. Cl.: C05C 9/00, C05C 3/00, C05D 9/00, C05D 9/02, C05G 5/00, B01J 2/26

(54) **VERFAHREN UND TROPFENFORMER ZUM HERSTELLEN VON PASTILLEN SOWIE VERFAHREN ZUM HERSTELLEN EINES SCHWEFELHALTIGEN DÜNGERS**
METHOD AND DROP FORMER FOR PRODUCING TABLETS AND METHOD FOR PRODUCING A SULFUROUS FERTILIZER
PROCÉDÉ ET GÉNÉRATEUR DE GOUTTES POUR LA PRODUCTION DE PASTILLES, ET PROCÉDÉ DE PRODUCTION D'UN ENGRAIS SOUFRÉ

(30) Priorität: 11.12.2007 DE 102007061408
(43) Veröffentlichungstag der Anmeldung: 22.09.2010
(73) Patentinhaber: Sandvik Materials Technology Deutschland GmbH, 40549 Düsseldorf (DE)
(72) Erfinder: SCHROMM, Hans-Kurt, 71522 Backnang (DE); BAEDER, Albert, 71336 Waiblingen (DE); KLEINHANS, Matthias, 70736 Fellbach (DE)
(74) Vertreter: Patentanwälte Ruff, Wilhelm, Beier, Dauster & Partner
(86) Internationale Anmeldenummer: PCT/EP2008/010222
(87) Internationale Veröffentlichungsnummer: WO 2009/074250

(56) Entgegenhaltungen:
- EP-A- 1 195 365
- WO-A-03/011446
- WO-A-03/022451
- WO-A-2006/111331
- DE-A1- 19 826 570
- ES-A1- 2 187 220
- US-A- 4 330 319
- US-A- 5 326 164
- US-A- 5 439 288

## Beschreibung

Die Erfindung betrifft ein Verfahren zum Herstellen von Pastillen aus Mischungen mehrerer Stoffe, insbesondere Harnstoffmischungen. Die Erfindung betrifft auch eine Vorrichtung zum Herstellen von Pastillen aus Mischungen mehrerer Stoffe, insbesondere Harnstoffmischungen.

Aus der internationalen Patentveröffentlichung WO 2006/111331A1 ist ein Verfahren zum Herstellen von Harnstoffpastillen bekannt. Eine Harnstoffschmelze soll dort einem Tropfenformer zugeführt werden, der eine gelochte, rotierende Außentrommel aufweist. Durch die Außentrommel wird die Harnstoffschmelze hindurchgedrückt und fällt tropfenförmig auf ein gekühltes Stahlband. Während des Weitertransports durch das Stahlband kühlen die aufgebrachten Harnstoffschmelzentropfen ab und können am Ende des Bandes als verfestigte Pastillen abgenommen werden. Die Harnstoffschmelze kann im Wesentlichen aus reinem Harnstoff bestehen oder zusätzlich mit Additiven und/oder weiteren Stoffen gemischt werden.

In der deutschen Offenlegungsschrift DE 198 26 570 A1 ist ein Verfahren zur Herstellung von Düngemittel-Granulaten beschrieben, die Harnstoff und Ammonsulfat enthalten. Hierzu wird eine Schmelzsuspension bestehend aus Ammoniumsulfat und Harnstoff mittels einer Düse in ein Granulat mit ungleichmäßigen Teilchengrößen zerstäubt.

Die europäische Offenlegungsschrift EP 1 195 365 A1 beschreibt ein Verfahren zur Herstellung von Methylenharnstoff-Polymeren. Darin werden Ausgangsstoffe über ein Wägeband zum Aufschmelzen einem beheizbaren Extruder zugeführt. Dieser extrudiert die Schmelze zu einem Formwerkzeug, das die Extrusionsstränge auf die gewünschte Größe ablängt.

Aus der internationale Patentveröffentlichung WO 03/011 446 A1 ist eine Vorrichtung zum Auspressen fließfähiger Substanzen beschrieben. Diese weist eine gelochte, rotierende Trommel auf, innerhalb der ein Zuführrohr angeordnet ist. Mit der Vorrichtung werden die fließfähigen Substanzen tropfenförmig granuliert.

In der US 5,326,164 ist eine Mischeinheit beschrieben, die in Rohren oder Schläuchen Verwendung findet. Die Mischeinheit weist drei Stäbe auf, die parallel zueinander verlaufen und ein gleichseitiges Dreieck bilden. Innerhalb des gleichseitigen Dreieckes sind Ultraschallgeneratoren angeordnet, die mittels Haltern mit den Stäben verbunden sind. Zwischen jeweils zwei benachbarten Stäben erstreckt sich ein mäandrierend ausgebildetes Hindernis. Diese Hindernisse sind so ausgebildet, dass sie parallel zu der Mantelfläche des Rohres bzw. des Schlauches verlaufen, in dem sie angeordnet sind. Sie bilden also in einer Schnittansicht gemeinsam einen Ring.

Bei der Herstellung von Pastillen aus Mischungen mehrerer Stoffe kann es problematisch sein, die zuverlässige und innige Mischung der verschiedenen Stoffe zu gewährleisten. Eine gleichmäßige und innige Mischung der Stoffe der Mischungen ist von besonderer Bedeutung, da auch innerhalb der sehr kleinen Pastillen eine gleichmäßige Stoffverteilung erreicht werden soll, um eine gleich bleibende Produktqualität sicherzustellen.

Der Erfindung liegt die Aufgabe zugrunde, ein Verfahren und eine Vorrichtung zum Herstellen von Pastillen aus Mischungen mehrerer Stoffe anzugeben, mit der eine gleichmäßige Stoffzusammensetzung der Pastillen gewährleistet werden kann.

Erfindungsgemäß ist hierzu ein Verfahren zum Herstellen von Pastillen aus Mischungen mehrerer Stoffe, insbesondere Harnstoffmischungen, mit folgenden Schritten vorgesehen: Herstellen einer flüssigen Schmelze eines ersten Stoffes, Zumischen wenigstens eines weiteren Stoffes in fester oder flüssiger Form zu der Schmelze zum Herstellen einer Mischung, Ausbringen von Tropfen der Mischung auf ein Stahlband mittels eines Tropfenformers mit rotierender, gelochter Außentrommel, Verfestigen der Tropfen der Mischung auf dem Stahlband zu Pastillen, wobei der wenigstens eine weitere Stoff in flüssiger Form der flüssigen Schmelze unmittelbar vor dem Tropfenformer zugemischt wird oder in fester Form der flüssigen Schmelze stromaufwärts einer zweistufigen beheizten, stromaufwärts des Tropfenformers angeordneten, Mahl- und Mischeinheit zugemischt wird, worin die Mischung innerhalb des Tropfenformers bis unmittelbar vor dem Austritt durch Düsen und Öffnungen der rotierenden Außentrommel mittels eines sich innerhalb des Tropfenformers erstreckenden Rührwerks gerührt wird und worin die Mischung innerhalb des Zuführkanals des Tropfenformers gerührt wird.

Insbesondere bei der Herstellung von Harnstoffmischungen und der Pastillierung solcher Harnstoffmischungen hat sich herausgestellt, dass Zusatzstoffe in flüssiger Form der flüssigen Schmelze, insbesondere der Harnstoffschmelze, unmittelbar vor dem Tropfenformer zugemischt werden sollten. Durch die Zumischung unmittelbar vor dem Tropfenformer wird verhindert, dass sich die flüssige Schmelze des ersten Stoffes und der hinzugefügte weitere flüssige Stoff beim Transport zum Tropfenformer wieder entmischen, beispielsweise aufgrund verschiedener spezifischer Gewichte. Die Zumischung des weiteren flüssigen Stoffs unmittelbar vor dem Tropfenformer ermöglicht es, über die gesamte Breite des Tropfenformers eine Flüssigkeit mit inniger und gleichmäßiger Durchmischung als Tropfen auf das gekühlte Stahlband auszugeben. Sollen der flüssigen Schmelze hingegen feste Zusatzstoffe zugegeben werden, so hat sich das Vorsehen einer zweistufigen beheizten Mahl- und Mischeinheit als äußerst vorteilhaft erwiesen, um eine gleichmäßige und innige Mischung des ursprünglich festen weiteren Stoffes und der flüssigen Schmelze des ersten Stoffes zu gewährleisten. Beim Zugeben ursprünglich fester weiterer Stoffe wird somit das zweimalige Mahlen und Mischen in entsprechenden Einheiten benötigt, um eine gleichmäßige, kleine Partikelgröße sowie eine gleichmäßige Durchmischung sicherzustellen. Speziell im Falle von Harnstoffpastillen bzw. Pastillen aus Mischungen von Harnstoff und weiteren Stoffen, soll eine Partikelgröße in der letztendlich hergestellten Mischung mit einem Korndurchmesser von weniger als 250 µm, insbesondere 100 µm erreicht werden. Ein solcher Korndurchmesser erweist sich als geeignet für eine gute Dispergierung und anschließende Pastillierung. Die ursprünglich festen, weiteren Stoffe können dabei Farbstoffe bleiben oder teilweise oder sollständig verflüssigen, beispielsweise schmelzen oder auflösen.

Das Vorsehen eines mechanischen Rührwerks ist insbesondere beim Mischen einer Schmelze mit festen Partikeln von großem Vorteil. Das Vorsehen eines Rührwerks innerhalb des Tropfenformers, also unmittelbar vor dem Austritt durch Düsen des Tropfenformers und die gelochte Außentrommel des Tropfenformers, kann das Absacken oder Sedimentieren von festen Partikeln innerhalb der Schmelze verhindern. Durch das Rühren der Mischung innerhalb eines innerhalb der rotierenden Außentrommel angeordneten Zuführkanals des Tropfenformers, wird über die gesamte Breite der Außentrommel eine gleichmäßige und innige Durchmischung sichergestellt.

Vorteilhafterweise ist der erste Stoff Harnstoff und der weitere Stoff ist Ammoniumsulfat, Stickstoff, Phosphor, Kalium, Schwefel oder Wachs. Es können dem Harnstoff auch mehrere weitere Stoffe zugemischt werden, beispielsweise Mischungen aus den vorstehend genannten Stoffen und weiteren Additiven. Die Mischung enthält vorteilhafterweise wenigstens 30% Harnstoff. Die Mischung kann zwischen 5% und 20% Schwefel enthalten. Die Mischung kann zwischen 20% und 60% Ammoniumsulfat enthalten. Die Mischung kann auch zwischen 2% und 5% Wachs, Zink oder andere Additive enthalten. Insbesondere Mischungen von Harnstoff mit Schwefel oder Ammoniumsulfat haben sich als besonders vorteilhaft für die Herstellung von Dünger herausgestellt. Mit dem erfindungsgemäßen Verfahren lassen sich Harnstoff und Schwefel oder Harnstoff und Ammoniumsulfat ohne Zugabe von Zusatzstoffen miteinander vermischen. Zusatzstoffe werden bei konventionellen Verfahren dazu benötigt, um Mischungen aus Schwefel und Harnstoff zu stabilisieren, so dass während der Verarbeitung keine Entmischung auftritt. Beispielsweise werden hierzu Fettsäuren zum Stabilisieren solcher Suspensionen verwendet.

Vorteilhafterweise wird unmittelbar stromaufwärts oder innerhalb des Tropfenformers die Mischung mit Ultraschall beaufschlagt.

Auf diese Weise lässt sich unmittelbar vor dem Tropfenformer eine innige und gleichmäßige Durchmischung der mehreren Stoffe erreichen, so dass die hergestellten Pastillen eine äußerst gleichmäßige Materialzusammensetzung aufweisen. Insbesondere beim Mischen von zwei Flüssigkeiten tritt die Besonderheit auf, dass sich manche Flüssigkeiten aufgrund ihrer physikalischen Eigenschaften nicht homogen mischen. Bei dem erfindungsgemäßen Verfahren werden die Flüssigkeiten durch die Beaufschlagung mittels Ultraschallwellen in kleinste Partikel zerstäubt oder atomisiert und lassen sich dadurch homogen miteinander vermischen. Das erfindungsgemäße Verfahren lässt sich in besonders vorteilhafter Weise beim Mischen zweier Flüssigkeiten einsetzen, beispielsweise beim Mischen einer Harnstoffschmelze mit einem oder mehreren flüssigen Additiven. Aber auch dann, wenn der flüssigen Harnstoffschmelze feste Partikel zugesetzt werden, so werden diese Stoffe durch den zweistufigen Mahl- oder Mischprozess zum einen stark zerkleinert und zum anderen gegebenenfalls selbst aufgeschmolzen. In jedem Fall sorgt die Ultraschallbeaufschlagung auch beim Mischen von festen Partikeln kleiner Größe mit einer Schmelze, insbesondere einer Harnstoffschmelze, für eine gleichmäßige und innige Durchmischung. Durch die Ultraschallbeaufschlagung beim Mischen von elementarem Schwefel mit Harnstoff können äußerst vorteilhafte Wirkungen erzeugt werden. Durch die Beschallung mit Ultraschall wird der flüssige Elementarschwefel in feinste Partikel zerlegt, die insbesondere eine Teilchengröße zwischen 1 µm und 10 µm aufweisen. In gleicher Weise wird auch der ebenfalls flüssige Harnstoff in kleinste Partikel zerlegt. Harnstoff und elementarer Schwefel können dadurch innig und vor allem ohne Zugabe von Zusatzstoffen vermischt werden. Bei dem erfindungsgemäßen Verfahren kann die innige Mischung zwischen Harnstoff und elementaren Schwefel dabei bis zum Formen von Tropfen aufrechterhalten bleiben, die dann auf das gekühlte Stahlband abgelegt werden und zu Pastillen verfestigen. Ein weiterer Vorteil der Ultraschallbeaufschlagung von elementaren Schwefel und die dadurch folgende Zerlegung des Schwefels in feinste Partikel zwischen 1 µm und 10 µm Teilchengröße ist die Möglichkeit, elementaren Schwefel auch in gemäßigten Breitengraden als Düngemittel zu verwenden. Die Verwendung von Schwefel als Düngemittel sowie von Mischungen aus Harnstoff und Schwefel ist bekannt, problematisch ist aber, dass Pflanzen keinen Elementarschwefel sondern nur Sulfat als Nährstoff aufnehmen können. Aus diesem Grund wird üblicherweise Schwefel in aufwändigen Verfahren in Sulfat, z.B. Ammoniumsulfat umgewandelt. Bestimmte Bakterientypen, z.B. Thiobazillus oder Acidianus, oxidieren elementaren Schwefel mit Sauerstoff zu Sulfat. Dieser Prozess dauert in der Natur sehr lange und ist abhängig von Temperatur und Feuchtigkeit der Umgebung. Durch die Zerkleinerung des Schwefels mit der erfindungsgemäßen Ultraschallbeschallung auf Teilchengrößen zwischen 1 µm und 10 µm erzielt man eine enorme Oberflächenvergrößerung, die den Bakterien eine große Angriffsfläche bietet und die biologische Oxidation beschleunigt.

Vorteilhafterweise erfolgt das Beaufschlagen der Mischung mit Ultraschall innerhalb eines unmittelbar stromaufwärts der rotierenden Außentrommel oder innerhalb der rotierenden Außentrommel liegenden Zuführkanals des Tropfenformers.

Die Anordnung des Ultraschallerzeugers innerhalb eines Zuführkanals des Tropfenformers kann sicherstellen, dass die innige und gleichmäßige Durchmischung noch zum Zeitpunkt des Ausgebens durch die Öffnungen der gelochten Außentrommel und somit beim Formen von Pastillen vorhanden ist. Der Ultraschallsender, beispielsweise eine sogenannte Ultraschallsonotrode, kann sogar im Zuführkanal innerhalb der rotierenden Außentrommel angeordnet sein.

In Weiterbildung der Erfindung werden der Tropfenformer und zum Tropfenformer führende Rohrleitungen für den ersten und den wenigstens einen weiteren Stoff beheizt.

Auf diese Weise kann auch bei längeren Transportwegen verhindert werden, dass beispielsweise eine Harnstoffschmelze oder Salze, die als Additive verwendet werden, während der Zuführung zum Tropfenformer auskristallisieren. Vorteilhafterweise werden auch stromaufwärts des Tropfenformers liegende Pumpen und/oder Mahl- und Mischeinheiten beheizt.

Das der Erfindung zugrunde liegende Problem wird auch durch eine Vorrichtung zum Herstellen von Pastillen aus Mischungen mehrerer Stoffe, insbesondere Harnstoffmischungen, mit den Merkmalen von Anspruch 7 gelöst.

In Weiterbildung der Erfindung ist wenigstens ein Ultraschallschwinger im Zuführkanal angeordnet.

Das Vorsehen eines Ultraschallschwingers im Zuführkanal kann die innige und gleichmäßige Durchmischung mehrerer Stoffe sicherstellen. Dies gilt insbesondere dann, wenn an und für sich schlecht mischbare Stoffe miteinander verarbeitet werden sollen, beispielsweise Flüssigkeiten, die sich aufgrund ihrer physikalischen Eigenschaften nicht homogen mischen lassen. Beispielsweise können dies Flüssigkeiten mit unterschiedlichen Dichten sein, die sich selbsttätig wieder entmischen. Das Vorsehen eines Ultraschallschwingers im Zuführkanal sorgt dafür, dass aufgrund der ausgesandten Ultraschallwellen die Flüssigkeiten in kleinste Partikel zerstäubt oder atomisiert werden und sich dadurch gleichmäßig und innig durchmischen lassen.

In Weiterbildung der Erfindung ist der wenigstens eine Ultraschallschwinger unmittelbar stromaufwärts der Außentrommel und/oder innerhalb der Außentrommel im Zuführkanal angeordnet. Die Ultraschallsonotrode arbeitet beispielsweise bei einer Frequenz von 24 kHz mit 400 W Leistung. Der Schwingstab der Ultraschallsonotrode erstreckt beispielsweise über eine Länge von 100 mm in den Zuführkanal hinein.

In Weiterbildung der Erfindung weist der Ultraschallschwinger einen Schwingstab auf, der konzentrisch zum Zuführkanal und sich in diesen hinein erstreckend angeordnet ist, so dass zwischen einer Innenwandung des Zuführkanals und dem Schwingstab ein Ringspalt gebildet ist.

Es hat sich gezeigt, dass die Bildung eines solchen Ringspaltes zwischen Schwingstab und Innenwandung des Zuführkanals eine zuverlässige und innige Durchmischung mehrerer Stoffe sicherstellen kann.

Vorteilhafterweise mündet eine Speiseleitung für die Mischungen im Bereich des Ringspalts in den Zuführkanal.

Auf diese Weise muss die gesamte Mischung den Ringspalt passieren und wird, während sie durch den Ringspalt strömt, mit Ultraschallwellen beaufschlagt, so dass die in der Mischung enthaltenen unterschiedlichen Stoffe zerstäubt und dadurch innig miteinander durchmischt werden.

Erfindungsgemäß ist innerhalb des Zuführkanals eine Rühreinrichtung angeordnet.

Das Vorsehen einer Rühreinrichtung innerhalb des Zuführkanals kann das Durchmischen der zu vermischenden Stoffe bis unmittelbar vor dem Austritt durch Düsen des Tropfenformers und die Öffnungen der rotierenden, gelochten Außentrommel sicherstellen. Auch schlecht miteinander vermischbare Stoffe können dadurch im Zuführkanal gleichmäßig vermischt werden und über die gesamte Breite des Tropfenformers können Tropfen mit gleichmäßiger Materialzusammensetzung ausgegeben werden. Die Rühreinrichtung kann alternativ oder zusätzlich zu einem Ultraschallschwinger vorgesehen sein.

In Weiterbildung der Erfindung ist an einem freien Ende des Zuführkanals ein Motor angeordnet, der zum Antreiben der Rühreinrichtung vorgesehen ist.

In Weiterbildung der Erfindung weist die Rühreinrichtung eine innerhalb des Zuführkanals drehbar angeordnete Wendel auf.

Eine innerhalb des Zuführkanals drehbar angeordnete Wendel kann über die gesamte Länge des Zuführkanals eine gleichmäßige Durchmischung sicherstellen. Über die gesamte Länge des Zuführkanals werden dadurch die zu vermischenden Stoffe in Bewegung gehalten und beispielsweise wird das Absinken fester Partikel oder das Trennen von nicht ohne Weiteres vermischbaren Flüssigkeiten verhindert.

In Weiterbildung der Erfindung sind eine Motorabtriebswelle und die Wendel fluchtend zueinander angeordnet und im Wesentlichen drehfest gekoppelt.

Auf diese Weise wird ein vergleichsweise einfacher und dabei zuverlässiger Aufbau erreicht. Speziell wird auch ein platzsparender Aufbau erreicht.

In Weiterbildung der Erfindung weist die Rühreinrichtung eine innerhalb des Zuführkanals drehbar angeordnete Wendel auf, wobei die Längskanten der Wendel in geringem Abstand von der Innenwandung des Zuführkanals geführt sind.

Auf diese Weise kann ein schneller Verschleiß des Zuführkanals verhindert werden. Der Abstand von der Innenwandung des Zuführkanals zu den Längskanten der Wendel wird so schmal gewählt, dass innerhalb des Zuführkanals keine Totzone mit schlecht durchmischten Stoffen entstehen kann.

Vorteilhafterweise ist die Wendel mit mehreren, jeweils senkrecht und mittig auf der Wendel angeordneten Abstandshaltern versehen, deren freie Enden an der Innenwandung des Zuführkanals anliegen.

Überraschenderweise hat sich gezeigt, dass mittels solcher Abstandshalter, die beispielsweise durch an ihren freien Enden gerundete Kunststoffbolzen gebildet werden können, auch sehr lange und keinesfalls biegesteife Wendeln zuverlässig im Abstand von der Innenwandung des Zuführkanals gehalten werden können. Auch über große Wendellängen und bei Zuführkanälen mit kleinem Querschnitt lässt sich dadurch eine rotierende Wendel innerhalb des Zuführkanals und über die gesamte Breite des Zuführkanals realisieren.

Vorteilhafterweise sind die Abstandshalter in Längsrichtung der Wendel gesehen so weit voneinander beabstandet, dass sie auf um jeweils 90° zueinander verdrehten Wendelabschnitten angeordnet sind.

Auf diese Weise kann die Wendel zuverlässig abgestützt werden und die Abstandshalter können in sehr einfacher Weise als auf der Wendel montierte Bolzen ausgebildet sein.

In Weiterbildung der Erfindung ist die Wendel als um seine Längsachse in sich verdrehter Materialstreifen ausgebildet.

Beispielsweise kann ein gewendelter Edelstahlstreifen verwendet werden. Die mangelnde Biegesteifigkeit eines solchen Edelstahlstreifens stellt kein Problem dar, da mittels der Abstandshalter dennoch sichergestellt werden kann, dass die Wendel nicht die Innenwandung des Zuführkanals berührt. Auch bei Zuführkanälen mit kleinem Querschnitt kann somit eine Wendel vorgesehen werden, die sich auch über einen schmalen Zuführkanal mit einem Durchmesser von etwa 30 mm über eine Länge von bis zu einem Meter erstrecken kann, ohne selbst ein störendes Strömungshindernis darzustellen.

Die Erfindung betrifft auch ein Verfahren zum Herstellen eines schwefelhaltigen Düngers, wobei folgende Schritte vorgesehen sind: Herstellen einer Elementarschwefel enthaltenden Schmelze, Beaufschlagen der Elementarschwefel enthaltenden Schmelze mit Ultraschall und Pastillieren der Elementarschwefel enthaltenden Schmelze.

Überraschenderweise hat sich gezeigt, dass durch Herstellen einer Elementarschwefel enthaltenden Schmelze sowie Beaufschlagen dieser Schmelze mit Ultraschall Elementarschwefel in feinste Partikel mit einer Teilchengröße zwischen 1 µm und 10 µm zerlegt werden kann. Bei entsprechender Wahl der Schallleistung, beispielsweise mit einer Frequenz von 24 kHz und einer Leistung von etwa 400 W, liegt wenigstens der Großteil der Schwefelpartikel in der Schmelze in einem solchen Größenbereich. Die Verwendung von Schwefel als Düngemittel ist bekannt, ebenfalls bekannt ist aber auch, dass Pflanzen keinen Elementarschwefel sondern nur Sulfat als Nährstoff aufnehmen können. Aus diesem Grund wird Schwefel zur Düngerherstellung in aufwändigen Verfahren in Sulfat, z.B. Ammoniumsulfat umgewandelt, um dann solche Sulfate als Dünger oder in Düngermischungen zu verwenden. Die Umwandlung von Elementarschwefel in Sulfat ist allerdings auch in der Natur möglich, da bestimmte Bakterientypen, z.B. Thiobazillus oder Acidianus, elementaren Schwefel mit Sauerstoff zu Sulfat oxidieren können. Dieser Prozess dauert in der Natur aber sehr lange und ist abhängig von Temperatur und Feuchtigkeit der Umgebung. Durch die Zerkleinerung des Schwefels auf Teilchengrößen zwischen 1 µm bis 10 µm erzielt man eine enorme Oberflächenvergrößerung, die den Bakterien eine große Angriffsfläche bietet und dadurch die biologische Oxidation beschleunigt. Das erfindungsgemäße Verfahren zum Herstellen von schwefelhaltigem Dünger hat damit den entscheidenden Vorteil, dass auch in gemäßigten Breitengraden, in denen also die natürliche Umsetzung von Schwefel zu Sulfat sehr lange dauern würde, die direkte Verwendung von elementarem Schwefel als Düngemittel ermöglicht ist.

In Weiterbildung der Erfindung wird eine Schmelze aus Elementarschwefel und Harnstoff hergestellt.

Mischungen von Harnstoff mit Elementarschwefel sind als Dünger gut geeignet. Das erfindungsgemäße Verfahren, bei dem die Schmelze mit Ultraschall beaufschlagt wird und somit sowohl der Elementarschwefel als auch der Harnstoff in kleinste Partikel zerlegt werden, hat weiter den Vorteil, dass durch die entstehenden kleinen Teilchengrößen eine sehr innige und gleichmäßige Durchmischung von Harnstoff und Schwefel möglich ist. Beim nachfolgenden Pastillieren einer solchen Mischung kann dadurch sichergestellt werden, dass auch kleine Pastillen über einen langen Produktionszeitraum ein konstantes Mischungsverhältnis aufweisen. Speziell ist auch die Mischung von elementarem Schwefel und Harnstoff ohne jegliche Zusatzstoffe möglich und auch bei ausschließlicher Verwendung von Schwefel und Harnstoff als Mischungspartner werden keine Zusatzstoffe, wie z.B. Fettsäuren, benötigt, um die entstehende Mischung, insbesondere Suspension, zu stabilisieren. Das Zerlegen von Schwefel und Harnstoff mittels Ultraschall in kleinste Partikel ermöglicht es, eine gleichmäßige Durchmischung von Harnstoff und Schwefel jedenfalls so lange aufrecht zu erhalten, bis die Mischung pastilliert wird. Sobald die Mischung in Tropfenform auf ein gekühltes Stahlband ausgegeben ist, setzt der Erstarrungsprozess zu Pastillen ein und es kann keine Entmischung mehr stattfinden.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen Ausführungsformen lassen sich dabei in beliebiger Weise miteinander kombinieren ohne den Rahmen der Erfindung zu überschreiten. In den Zeichnungen zeigen:
- Fig. 1: eine schematische Darstellung einer erfindungemäßen Pastilliereinrichtung zum Herstellen einer Mischung aus wenigstens zwei Stoffen und zum Pastillieren dieser Mischung in einem Tropfenformer,
- Fig. 2: eine Schnittansicht eines Tropfenformers gemäß einer ersten Ausführungsform der Erfindung,
- Fig. 3: eine Schnittansicht eines Tropfenformers gemäß einer zweiten Ausführungsform der Erfindung und
- Fig. 4: eine teilweise geschnittene und vergrößerte Ansicht eines weiteren Tropfenformers gemäß einer dritten Ausführungsform der Erfindung.

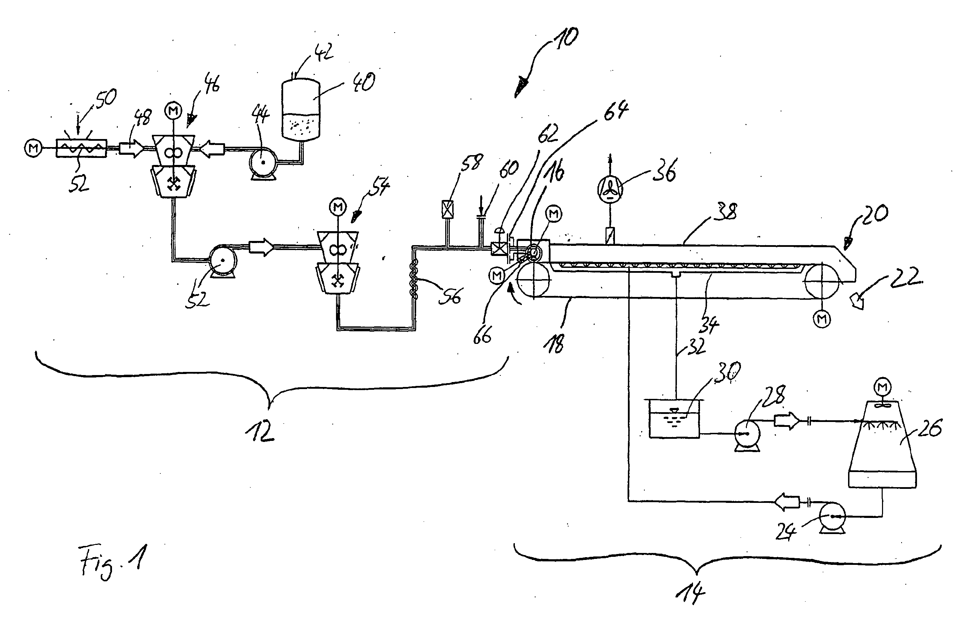

Die Darstellung der Fig. 1 zeigt eine Pastilliereinrichtung 10, bei der in einem ersten, mit 12 bezeichneten Abschnitt eine Mischung aus einer Harnstoffschmelze mit wenigstens einem weiteren Zusatzstoff oder Additiv hergestellt wird. Ein zweiter, mit 14 bezeichneter Abschnitt der Pastilliereinrichtung 10 dient zum Herstellen von Pastillen aus der im Abschnitt 12 hergestellten Mischung. Hierzu enthält der Abschnitt 14 einen Tropfenformer 16 mit einer rotierenden, gelochten Außentrommel und einem innerhalb der Außentrommel verlaufenden Zuführkanal. Aus dem Zuführkanal gelangt die zugeführte, flüssige Mischung in eine Düsenleiste, die wiederum an der Innenseite der gelochten Außentrommel anliegt. Die Flüssigkeit tritt durch die Düsen und durch Öffnungen der gelochten Außentrommel aus und fällt tropfenweise auf ein unterhalb des Tropfenformers 16 angeordnetes umlaufendes Stahlband 18. Das Stahlband 18 wird im Bereich seines Obertrums von unten mit Kühlflüssigkeit besprüht, so dass während des Transports der auf dem Stahlband 18 abgelegten Materialtropfen zum stromabwärts gelegenen Ende 20 des Obertrums die Materialtropfen zu Pastillen verfestigen und am stromabwärts gelegenen Ende 20 abgenommen werden können. Das Abnehmen der fertigen Pastillen ist mittels eines Pfeils 22 angedeutet. Unterhalb des Obertrums des Stahlbands 18 sind Sprühdüsen angeordnet, die mittels einer Pumpe 24 gespeist werden. Stromaufwärts der Pumpe 24 ist ein Kühlturm 26 angeordnet, in dem das Kühlwasser gekühlt wird. Eine Pumpe 28 stromaufwärts des Kühlturms 26 fördert Kühlwasser von einem Sammelbehälter 30 zu dem Kühlturm 26. Der Sammelbehälter 30 ist mittels einer Leitung 32 mit einem Sammelbecken 34 verbunden, das unterhalb des Obertrums des Stahlbandes angeordnet ist und in dem das vom Stahlband abtropfende Kühlwasser gesammelt wird.

Ein Ventilator 36 zieht Luft aus einer Haube 38 ab, die im Wesentlichen das vollständige Obertrum des Stahlbandes 18 bedeckt. In der Darstellung der Fig. 1 ist an mehreren Stellen mit dem Buchstaben M jeweils ein Motorantrieb bezeichnet. Beispielsweise wird eine in der Fig. 1 rechte Umlenkrolle für das Stahlband 18 mittels eines Motors angetrieben. Selbstverständlich sind aber darüber hinaus beispielsweise auch die Pumpen 24, 28 mittels Motoren angetrieben, auch wenn dies nicht explizit dargestellt ist.

Zum Herstellen einer Harnstoffschmelze ist ein Harnstoffverdampfer 40 vorgesehen, in dem sich in Wasser gelöster Harnstoff befindet. Diese Flüssigkeit wird beheizt, das Wasser verdampft und tritt an einem Auslass 42 als Wasserdampf aus. Nach im Wesentlichen vollständigem Verdampfen des Wassers entsteht eine Harnstoffschmelze, die über beheizte Leitungen und eine Pumpe 44 weiter befördert wird. Um ein Erkalten und vor allem Auskristallisieren der Harnstoffschmelze zu vermeiden, sind sowohl die Rohrleitungen, die von dem Harnstoffverdampfer 40 ausgehen, als auch die Pumpe 44 mit einem Heizmantel versehen. Die Harnstoffschmelze gelangt zu einer ersten Mahl- und Mischeinheit 46, der neben der Harnstoffschmelze auch ein weiterer Stoff zugeführt wird, wie durch einen Pfeil 48 angedeutet ist. Als weiterer Stoff wird beispielsweise Ammoniumsulfat (NH₄2SO₄) verwendet, das gemäß einem Pfeil 50 als Feststoff einer Dosiereinheit 52 zugeführt wird. Das Ammoniumsulfat liegt beispielsweise in körniger Form vor, so das es mittels der Dosiereinheit und über eine beheizte Leitung ebenfalls zu der ersten Mahl- und Mischeinheit 46 befördert werden kann. In der ersten Mahl- und Mischeinheit 46 wird das feste, beispielsweise körnige Ammoniumsulfat zunächst gemahlen und dann mit der Harnstoffschmelze vermischt. Eventuell kann die Harnstoffschmelze auch über das Mahlwerk geführt werden. Über eine beheizte Ausgangsleitung gelangt das Gemisch zu einer weiteren Pumpe 52 und wird von dort dann zu einer zweiten Mahl- und Mischeinheit 54 gefördert. In der zweiten Mahl- und Mischeinheit 54 werden die Ammoniumsulfatpartikel weiter zerkleinert und auf einen Korndurchmesser von weniger als 250 µm, insbesondere 100 µm, verkleinert. Das Vorsehen eines zweistufigen Mahl- und Mischverfahrens mittels zweier hintereinander geschalteter Mahl- und Mischeinheiten 46, 54 hat sich als äußerst brauchbar und vorteilhaft erwiesen, um verschiedenste Feststoffe mit einer Schmelze eines ersten Stoffes, beispielsweise einer Harnstoffschmelze, innig und gleichmäßig zu vermischen. Ausgehend von der zweiten Mahl- und Mischeinheit 54 wird die Mischung dann über eine beheizte Leitung und einen beheizten, flexiblen Schlauchabschnitt 56 zu dem Tropfenformer 16 gefördert.

Stromabwärts des flexiblen Schlauchs 56 befindet sich der Tropfenformer 16, wobei in der schematischen Darstellung der Fig. 1 zur Verdeutlichung der Bereich unmittelbar stromaufwärts des Tropfenformers 16 auseinander gezogen dargestellt ist. Unmittelbar stromaufwärts des Tropfenformers 16 kann mittels einer Einrichtung 58 ein flüssiges Additiv zudosiert werden. Um auch Flüssigkeiten, die sich aufgrund ihrer physikalischen Eigenschaften nicht ohne Weiteres und nicht dauerhaft mischen lassen, zuverlässig und gleichmäßig zu durchmischen, ist unmittelbar stromaufwärts des Tropfenformers 16 eine sogenannte Ultraschall-Sonotrode 60 vorgesehen. Die Ultraschall-Sonotrode gibt Ultraschallwellen in die Rohrleitung ab und sorgt dadurch dafür, dass die zu vermischenden Stoffe in kleinste Partikel zerstäubt werden und sich dadurch gleichmäßig vermischen. Da die Ultraschall-Sonotrode, also ein Ultraschallschwinger, unmittelbar stromaufwärts des Tropfenformers 16 angeordnet ist, kann die Mischung zwischen verschiedensten Stoffen, insbesondere bei Flüssigkeiten, in jedem Fall bis zum Austritt durch die gelochte Außentrommel des Tropfenformers 16 sichergestellt werden, so dass auf dem Stahlband 18 Tropfen der Mischung abgelegt werden, die eine sehr gleichmäßige und über die verschiedenen Tropfen gesehen konstante Materialzusammensetzung aufweisen.

Mit der Bezugsziffer 62 ist ein Absperrventil bezeichnet, und stromabwärts des Absperrventils 42 ist schematisch eine Heizeinrichtung 64 angedeutet, die den Tropfenformer 16 selbst und insbesondere einen Zuführkanal innerhalb der rotierenden Außentrommel beheizt. Darüber hinaus ist der Tropfenformer 16 mit einer Rühreinheit 66 versehen, die motorisch angetrieben ist und die ebenfalls bis unmittelbar vor dem Austritt durch die rotierende Außentrommel eine innige und gleichmäßige Mischung der verschiedenen Stoffe sicherstellt. Die Ultraschall-Sonorode 60 und die Rühreinrichtung 66 können alternativ oder gleichzeitig vorgesehen sein.

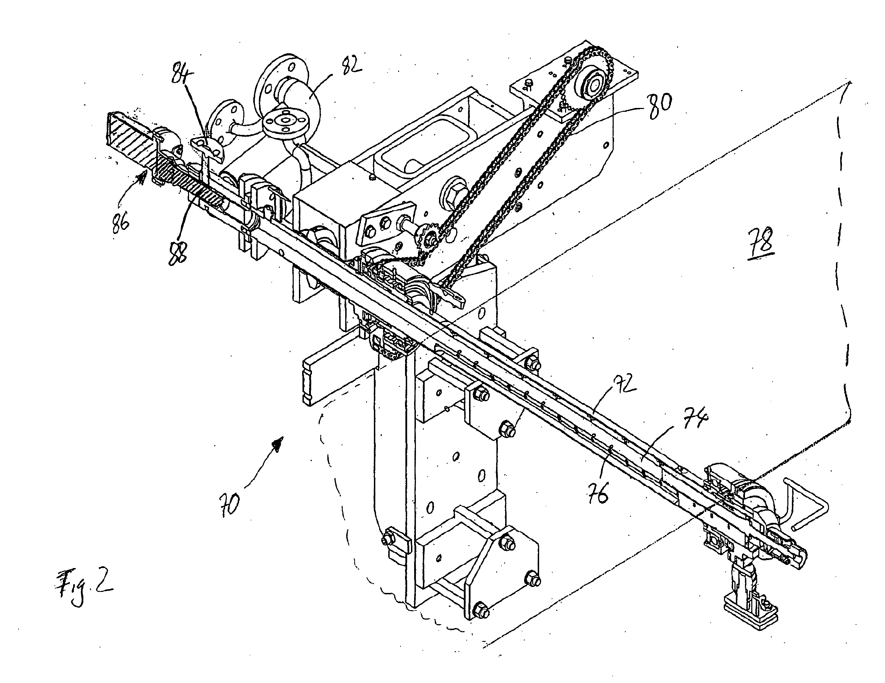

Die Darstellung der Fig. 2 zeigt einen Tropfenformer 70 gemäß einer ersten Ausführungsform der Erfindung detaillierter. Der Tropfenformer 70 weist eine rotierende, gelochte Außentrommel 72 auf, innerhalb der ein Zuführkanal 74 und eine Düsenleiste 76 angeordnet sind. Die Düsenleiste 76 liegt an einer Innenwandung der gelochten Außentrommel 72 an und liegt darüber hinaus in Gegenüberlage zu einem Stahlband 78, das unter dem Tropfenformer 70 hindurch bewegt wird. Zu vertropfende Flüssigkeit gelangt durch den Zuführkanal 74 zur Düsenleiste 76 und wird ausgehend von der Düsenleiste 76 durch die Öffnungen der rotierenden Außentrommel 72 gedrückt. Sobald die Flüssigkeit in Tropfenform die Öffnungen der rotierenden Außentrommel 72 passiert hat, werden sie auf dem Stahlband 78 abgelegt. Wie bereits anhand der Fig. 1 erläutert wurde, verfestigen sich die abgelegten Tropfen während des Transports auf dem Stahlband 78 zu Pastillen und können an dessen Umlenkung abgenommen werden.

In der Darstellung der Fig. 2 ist zu erkennen, dass die rotierende Außentrommel 72 mittels einer Kette 80 angetrieben wird, die wiederum von einem nicht dargestellten Antriebsmotor beaufschlagt wird.

Der Tropfenformer 70 und insbesondere der Zulaufkanal 74 ist beheizt, wobei in der Darstellung der Fig. 2 der Übersichtlichkeit halber geeignete Heizeinrichtungen nicht dargestellt sind. Die Harnstoffschmelze gelangt über die beheizte Rohrleitung 82 in den Zuführkanal und zwar wird die Harnstoffschmelze im Bereich eines in der Darstellung der Fig. 2 linken Endes des Zuführkanals 74 in diesen eingeleitet. Ebenfalls im Bereich dieses linken Endes des Zuführkanals 74 wird ein flüssiges Additiv über eine Rohrleitung 84 in den Zuführleitung 74 eingeführt. Um nun eine möglichst gleichmäßige und innige Durchmischung der Harnstoffschmelze und des flüssigen Additivs sicherzustellen, ist an diesem Ende des Zuführkanals 74, an dem die Rohrleitung 82 für die Harnstoffschmelze und die Rohrleitung 84 für das flüssige Additiv münden, ein Ultraschallschwinger 86 vorgesehen. Der Ultraschallschwinger 86 weist einen Schwingstab 88 auf, der sich konzentrisch in den Zuführkanal 74 hinein erstreckt, so dass zwischen einer Innenwandung des Zuführkanals 74 an diesem Ende und der Außenwandung des Schwingstabs 88 ein Ringspalt gebildet ist. Diesen Ringspalt muss sowohl die Harnstoffschmelze als auch das flüssige Additiv passieren, um in den weiteren Verlauf des Zuführkanals 74 und speziell zur Düsenleiste 76 zu gelangen. Während die Harnstoffschmelze und das flüssige Additiv durch diesen Ringspalt strömen, werden sie von Ultraschallwellen beaufschlagt. Dadurch werden sowohl die Harnstoffschmelze als auch das flüssige Additiv mittels der Ultraschallwellen in kleinste Partikel zerstäubt oder atomisiert, wobei sich diese kleinsten Partikel dann homogen vermischen. Der Schwingstab 88 des Ultraschallschwingers 86 ragt beispielsweise etwa 10 cm in das Stirnende des Zuführkanals 74 hinein, schwingt bei einer Frequenz von etwa 24 kHz und weist eine Leistung von etwa 400 W auf. Vorteilhafterweise kann eine Titan-Sonotrode eingesetzt werden, die beispielsweise einen Durchmesser von 22 mm aufweist und die in den Zuführkanal mit einem Durchmesser von 30 mm eingesetzt wird. Die Breite des Ringspalts beträgt infolgedessen 4 mm.

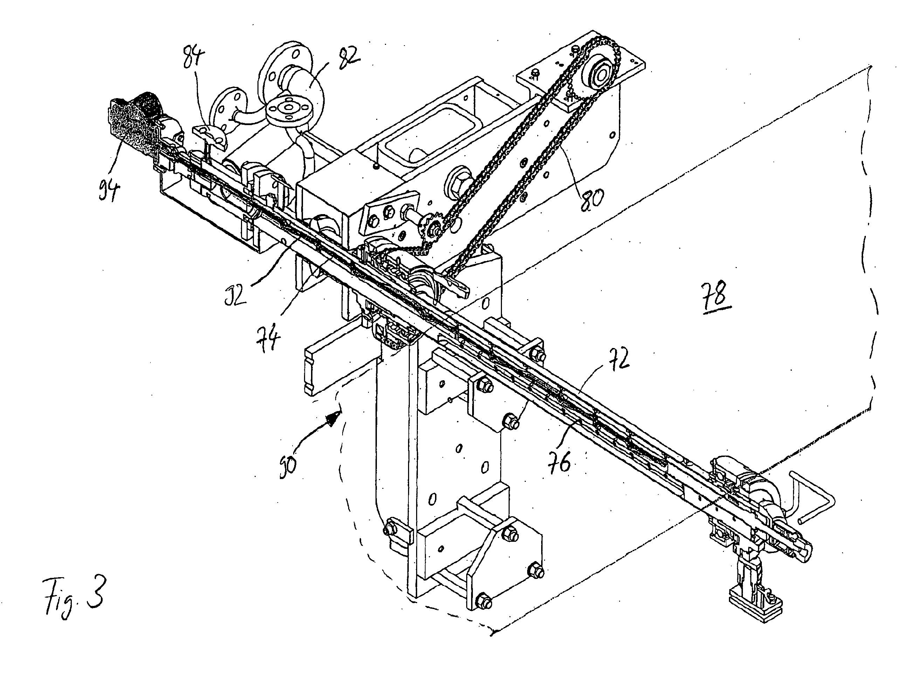

Die Darstellung der Fig. 3 zeigt eine weitere Ausführungsform eines Tropfenformers 90 gemäß der Erfindung. Der Tropfenformer 90 weist ebenfalls die gelochte, rotierende Außentrommel 72 auf, die mittels der Kette 80 in Drehung versetzt wird und die oberhalb des Stahlbandes 78 angeordnet ist. Die zu vertropfende Flüssigkeit gelangt über den Zuführkanal 74 zur Düsenleiste 76 und dann, wie bereits erläutert wurde, durch die Öffnungen der rotierenden Außentrommel 72 auf das Stahlband 78. Der Tropfenformer 90 der Fig. 3 ist in weiten Teilen identisch zum Tropfenformer 70 der Fig.2 aufgebaut und es werden lediglich die Unterschiede zum Tropfenformer 70 genauer erläutert. Der Tropfenformer 90 weist eine Rühreinrichtung in Form einer sich über die gesamte Länge des Zuführkanals 74 erstreckenden Wendel 92 auf. Die Wendel wird an einem Ende mittels eines Motors 94 angetrieben und sorgt dafür, dass die im Zuführkanal 74 befindliche Flüssigkeit bis zum Austritt durch die Düsenleiste 76 ständig in Bewegung gehalten wird. Eine solche Rühreinrichtung ist insbesondere dann vorteilhaft, wenn Suspensionen vertropft werden sollen, beispielsweise eine Mischung aus einer Harnstoffschmelze mit einem weiteren Stoff, beispielsweise Ammoniumsulfat, der gegebenenfalls noch Partikel mit einer Korngröße von weniger 250 µm aufweist. Durch die Wendel 92, die die zu vertropfende Mischung ständig in Bewegung hält, kann verhindert werden, dass sich die Partikel, beispielsweise der Schwerkraft folgend, absetzen. Eine Mischung aus der Harnstoffschmelze und dem festen Zusatzstoff, beispielsweise Ammoniumsulfat, wird gemäß dem zweistufigen Mahl- und Mischverfahren, das anhand der Fig. 1 beschrieben wurde, hergestellt.

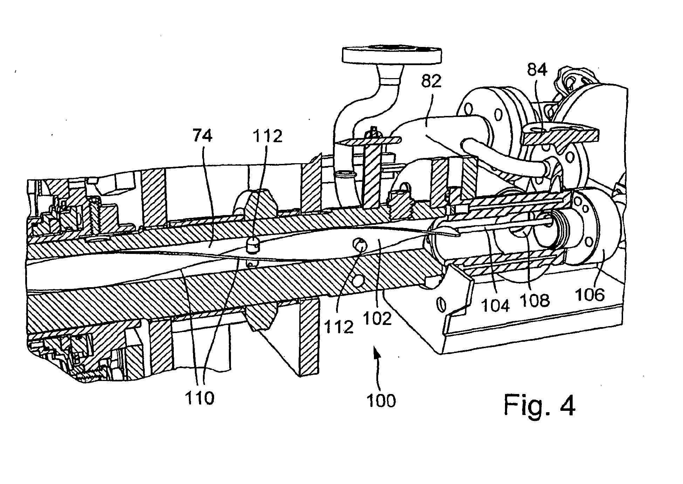

Die Darstellung der Fig. 4 zeigt eine weitere Ausführungsform eines Tropfenformers 100, die sehr ähnlich zum Tropfenformer 90 der Fig. 3 aufgebaut ist und sich lediglich in der Gestaltung der Wendel unterscheidet. Während die Wendel 92 der Fig. 3 eine dreidimensional ausgeformte Wendel bildet, ist eine Wendel 102 des Tropfenformers 100 als gewundenes Metallband ausgebildet. Es ist in der Darstellung der Fig. 4 gut zu erkennen, dass die Wendel 102 aus einem um seine Längsachse verdrehten Blechstreifen besteht. Das in der Darstellung der Fig. 4 rechte Ende dieses Blechstreifens ist mit einem Stab 104 verlängert und mit einem lediglich abschnittsweise dargestellten Antriebsmotor 106 verbunden. Eine Abtriebswelle des Antriebsmotor 106 und eine Mittellängsachse der Wendel 102, in der auch der Stab 104 liegt, fluchten zueinander. Gut zu erkennen ist in der Darstellung der Fig. 4 auch eine Mündung 108 der beheizten Rohrleitung 82 für die Harnstoffschmelze. Eine Rohrleitung 84 dient zum Zuführen eines flüssigen Additivs, wobei die Rohrleitung 84 erst im Bereich des Anfangs der Wendel 102 in den Zuführkanal 74 mündet.

Um zu verhindern, dass möglicherweise scharfkantige Längskanten 110 der Wendel 102 unmittelbar die Wandung des Zuführkanals 74 kontaktieren und diesen dadurch schon nach kurzer Laufzeit beschädigen, ist die Wendel 102 mit mehreren Abstandshaltern 112 versehen. Die Abstandshalter 112 sind jeweils als von der Wendel senkrecht abragende Kunststoffbolzen mit gerundeten freien Enden ausgebildet. Die freien, gerundeten Enden dieser Kunststoffbolzen stützen sich auf einer Innenwandung des Zuführkanals 74 ab und sorgen dadurch dafür, dass die Längskanten 110 der Wendel 102 zwar in geringem Abstand von der Innenwandung des Zuführkanals 74 geführt werden, diese aber nicht berühren. Wie in der Darstellung der Fig. 4 zu erkennen ist, sind jeweils zwei einander gegenüberliegende Abstandshalter auf unterschiedlichen Seiten des Materialstreifens vorgesehen, der die Wendel 102 bildet. Darüber hinaus sind über die Länge der Wendel 102 gesehen mehrere Abstandshalter vorgesehen und vorteilhafterweise sind die Abstandshalter 112 jeweils in Längsrichtung der Wendel 102 gesehen so weit voneinander beabstandet, dass sie senkrecht zueinander ausgerichtet sind. Auf einen ersten Abstandshalter 112 folgt nach einer Vierteldrehung der Wendel 102 somit ein weiterer Abstandshalter 112. Auf diese Weise kann die Wendel zuverlässig im Zuführkanal 74 geführt werden. Wie der Darstellung der Fig. 4 weiter zu entnehmen ist, sind lediglich zwei Abstandshalter 112 zu erkennen. In dem dem Antriebsmotor 106 benachbarten Bereich der Wendel 102 wird über den Stab 104 das Antriebsmoment aufgebracht und daher ist eine vergleichsweise starke Verformung oder Tordierung der Wendel 102 in diesem Bereich zu erwarten. In diesem Bereich tendiert die Wendel 102 somit stärker dazu, seitlich auszuweichen, so dass in kurzem Abstand zwei Abstandshalter 112 um 90° zueinander versetzt vorgesehen sind. Im weiteren Verlauf der Wendel 102 kann es dann ausreichend sein, lediglich nach einer vollständigen Umdrehung der Wendel 102 erneut einen Abstandshalter vorzusehen.

## Patentansprüche

1. Verfahren zum Herstellen von Pastillen aus Mischungen mehrerer Stoffe, insbesondere Harnstoffmischungen, mit folgenden Schritten:
- Herstellen einer flüssigen Schmelze eines ersten Stoffes,
- Zumischen wenigstens eines weiteren Stoffes in fester oder flüssiger Form zu der Schmelze zum Herstellen einer Mischung,
- Ausbringen von Tropfen der Mischung auf ein Stahlband (18; 78) mittels eines Tropfenformers (16; 70; 90; 100) mit rotierender, gelochter Außentrommel (72),
- Verfestigen der Tropfen der Mischung auf dem Stahlband zu Pastillen, wobei der wenigstens eine weitere Stoff in flüssiger Form der flüssigen Schmelze unmittelbar vor dem Tropfenformer zugemischt wird oder in fester Form der flüssigen Schmelze stromaufwärts einer beheizten Mahl- und Mischeinheit (46, 54) zugemischt wird, worin die Mischung innerhalb des Tropfenformers (16; 70; 90; 100) bis unmittelbar vor dem Austritt durch Düsen und Öffnungen der rotierenden Außentrommel (72) mittels eines sich innerhalb des Tropfenformers erstreckenden Rührwerks gerührt wird und worin die Mischung innerhalb eines innerhalb der rotierenden Außentrommel angeordneten Zuführkanals (74) des Tropfenformers gerührt wird.

2. Verfahren nach Anspruch 1, worin der erste Stoff Harnstoff ist und der weitere Stoff Ammoniumsulfat, Stickstoff, Phosphor, Kalium, Schwefel oder Wachs ist.

3. Verfahren nach Anspruch 2, worin als weitere Stoffe Ammoniumsulfat, Stickstoff, Phosphor, Kalium, Schwefel, Wachs, weitere Additive und/oder Mischungen aus diesen Stoffen zugemischt werden.

4. Verfahren nach wenigstens einem der vorstehenden Ansprüche, worin unmittelbar stromaufwärts oder innerhalb des Tropfenformers (16; 70; 90; 100) die Mischung mit Ultraschall beaufschlagt wird.

5. Verfahren nach Anspruch 4, worin das Beaufschlagen der Mischung mit Ultraschall innerhalb eines unmittelbar stromaufwärts der rotierenden Außentrommel (72) oder innerhalb der rotierenden Außentrommel (72) liegenden Zuführkanals (74) des Tropfenformers (16; 70; 90; 100) erfolgt.

6. Verfahren nach wenigstens einem der vorstehenden Ansprüche, worin der Tropfenformer und zum Tropfenformer führende Rohrleitungen für den ersten und den wenigstens einen weiteren Stoff und/oder stromaufwärts des Tropfenformers liegende Pumpen und/oder Mahl- und Mischeinheiten (46; 54) beheizt werden.

7. Vorrichtung zum Herstellen von Pastillen aus Mischungen mehrerer Stoffe, insbesondere Harnstoffmischungen, mit:
- einer Einrichtung zum Herstellen einer flüssigen Schmelze eines ersten Stoffes,
- mit Mitteln zum Zumischen wenigstens eines weiteren Stoffes in fester oder flüssiger Form zu der Schmelze zum Herstellen einer Mischung,
- mit einem Tropfenformer (16; 70; 90; 100) mit rotierender, gelochter Außentrommel (72), und einem Stahlband (18; 78) zum Ausbringen von Tropfen der Mischung auf das Stahlband (18; 78), wobei die Tropfen der Mischung auf dem Stahlband (17; 78) zu Pastillen verfestigen,
- **dadurch gekennzeichnet, dass** der wenigstens eine weitere Stoff in flüssiger Form der flüssigen Schmelze unmittelbar vor dem Tropfenformer zugemischt wird oder in fester Form der flüssigen Schmelze stromaufwärts einer beheizten Mahl- und Mischeinheit (46, 54) zugemischt wird und dass
- ein sich innerhalb des Tropfenformers erstreckendes Rührwerk zum Rühren der Mischung innerhalb des Tropfenformers (16; 70; 90; 100) bis unmittelbar vor dem Austritt durch Düsen und Öffnungen der rotierenden Außentrommel (72) vorgesehen ist, wobei die Mischung mittels des Rührwerks innerhalb eines innerhalb der rotierenden Außentrommel angeordneten Zuführkanals (74) des Tropfenformers gerührt wird.

8. Vorrichtung nach Anspruch 7, **dadurch gekennzeichnet, dass** das Rührwerk eine innerhalb des Zuführkanals (74) drehbar angeordnete Wendel (92; 102) aufweist.

9. Vorrichtung nach Anspruch 7 oder 8, **dadurch gekennzeichnet, dass** das Rührwerk eine innerhalb des Zuführkanals (74) drehbar angeordnete Wendel (102) aufweist, wobei die Längskanten (110) der Wendel (102) in geringem Abstand von der Innenwandung des Zuführkanals (74) geführt sind.

10. Vorrichtung nach Anspruch 8 oder 9, **dadurch gekennzeichnet, dass** die Wendel (102) mit mehreren, jeweils senkrecht und mittig auf der Wendel (102) angeordneten Abstandshaltern (112) versehen ist, deren freie Enden an der Innenwandung des Zuführkanals (74) anliegen.

11. Vorrichtung nach Anspruch 10, **dadurch gekennzeichnet, dass** die Abstandshalter (112) in Längsrichtung der Wendel (102) gesehen wenigstens teilweise so weit voneinander beabstandet sind, dass sie auf um jeweils 90° zueinander verdrehten Wendelabschnitten angeordnet sind.

12. Vorrichtung nach wenigstens einem der Ansprüche 7 bis 11, **dadurch gekennzeichnet, dass** das Rührwerk eine innerhalb des Zuführkanals drehbar angeordnete Wendel (102) aufweist, wobei die Wendel (102) als um seine Längsachse in sich verdrehter Materialstreifen ausgebildet ist.

13. Vorrichtung nach wenigstens einem der Ansprüche 7 bis 12, **dadurch gekennzeichnet, dass** wenigstens ein Ultraschallschwinger (60; 86) im Zuführkanal (74) angeordnet ist.

14. Vorrichtung nach Anspruch 13, **dadurch gekennzeichnet, dass** der wenigstens eine Ultraschallschwinger (60; 86) unmittelbar stromaufwärts der Außentrommel und/oder innerhalb der Außentrommel im Zuführkanal (74) angeordnet ist.

15. Vorrichtung nach Anspruch 13 oder 14, **dadurch gekennzeichnet, dass** der Ultraschallschwinger (60; 86) einen Schwingstab (88) aufweist, der konzentrisch zum Zuführkanal (74) und sich in diesen hinein erstreckend angeordnet ist, so dass zwischen einer Innenwandung des Zuführkanals (74) und dem Schwingstab (88) ein Ringspalt gebildet ist.

16. Vorrichtung nach Anspruch 15, **dadurch gekennzeichnet, dass** wenigstens eine Speiseleitung (82; 84) für die zu pastillierenden Stoffe im Bereich des Ringspalts in den Zuführkanal mündet.

## Claims

1. Method for the production of tablets from mixtures of a plurality of substances, in particular urea mixtures, with the following steps:
- producing a liquid melt of a first substance,
- admixing at least one further substance in solid or liquid form to the melt to yield a mixture,
- outputting drops of the mixture onto a steel belt (18; 78) by means of a drop former (16; 70; 90; 100) with a rotating, perforated outer drum (72),
- solidifying of the drops of the mixture on the steel belt to tablets, wherein the at least one further substance in liquid form is admixed to the liquid melt immediately before the drop former or in solid form is admixed to the liquid melt upstream of a heated grinding and mixing unit (46, 54), wherein the mixture within the drop former (16; 70; 90; 100) is agitated up to immediately before its discharge through nozzles and openings of the rotating outer drum (72) by means of an agitator device extending within the drop former, and wherein the mixture is agitated within a feed channel (74) of the drop former, which channel is arranged within the rotating outer drum.

2. Method according to claim 1, wherein the first substance is urea and the further substance is ammonium sulfate, nitrogen, phosphorus, potassium, sulfur or wax.

3. Method according to claim 2, wherein ammonium sulfate, nitrogen, phosphorus, potassium, sulfur, wax, further additives and/or mixtures of these substances are mixed in as further substances.

4. Method according to at least one of the preceding claims, wherein the mixture is subjected to ultrasonic sound immediately upstream of or within the drop former (16; 70; 90; 100).

5. Method according to claim 4, wherein subjecting the mixture to ultrasonic sound is within a feed channel (74) of the drop former (16; 70; 90; 100) that lies immediately upstream of the rotating outer drum (72) or within the rotating outer drum (72).

6. Method according to at least one of the preceding claims, wherein the drop former and piping for the first substance and the at least one further substance leading to the drop former and/or pumps disposed upstream of the drop former and/or grinding and mixing units (46; 54) are heated.

7. Device for the production of tablets from mixtures of a plurality of substances, in particular urea mixtures, comprising:
- a device for producing a liquid melt of a first substance,
- means for admixing of at least one further substance in solid or liquid form to the melt to yield a mixture,
- with a drop former (16; 70; 90; 100) with a rotating, perforated outer drum (72), and a steel belt (18; 78) for outputting of drops of the mixture onto the steel belt (18; 78), wherein the drops of the mixture solidify on the steel belt (18; 78) to form tablets,
- **characterized in that** the at least one further substance in liquid form is admixed to the liquid melt immediately before the drop former or in solid form is admixed to the liquid melt upstream of a heated grinding and mixing unit (46, 54), and **in that**
- an agitator device extending within the drop former is provided for agitating the mixture within the drop former (16; 70; 90; 100) up to immediately before its discharge through nozzles and openings of the rotating outer drum (72), wherein the mixture is agitated by means of the agitator device within a feed channel (74) of the drop former, which channel is arranged within the rotating outer drum.

8. Device according to claim 7, **characterized in that** the agitator device has a rotatable helix (92; 102) arranged within the feed channel (74).

9. Device according to claim 7 or 8, **characterized in that** the agitator device has a rotatable helix (102) arranged within the feed channel (74), wherein the longitudinal edges (110) of the helix (102) are guided at a small distance from the inner wall of the feed channel (74).

10. Device according to claim 8 or 9, **characterized in that** the helix (102) is provided with a plurality of spacers (112), each arranged vertically and centrally on the helix (102), with their free ends lying against the inner wall of the feed channel (74).

11. Device according to claim 10, **characterized in that** the spacers (112), viewed in the longitudinal direction of the helix (102), are at least in part at such a distance from one another that they are arranged on helix sections that are displaced through 90° relative to each other.

12. Device according to at least one of the claims 7 to 11, **characterized in that** the agitator device has a rotatable helix (102) arranged within the feed channel, wherein the helix (102) is in the form of a material strip that is twisted around itself about its longitudinal axis.

13. Device according to at least one of the claims 7 to 12, **characterized in that** the at least one ultrasonic oscillator (60; 86) is arranged in the feed channel (74).

14. Device according to claim 13, **characterized in that** the at least one ultrasonic oscillator (60; 86) is arranged immediately upstream of the outer drum and/or within the outer drum in the feed channel (74).

15. Device according to claim 13 or 14, **characterized in that** the ultrasonic oscillator (60; 86) has a vibrating rod (88) which is arranged concentrically to the feed channel (74) and extends into said feed channel, so that an annular gap is formed between an inner wall of the feed channel (74) and the vibrating rod (88).

16. Device according to claim 15, **characterized in that** at least one feed line (82; 84) for the substances to be tableted opens into the feed channel in the region of the annular gap.

## Revendications

1. Procédé de fabrication de pastilles constituées de mélanges de plusieurs substances, en particulier de mélanges d'urée, comprenant les étapes suivantes :
- fabrication d'une matière en fusion liquide d'une première substance,
- addition en mélange d'au moins une substance supplémentaire sous forme solide ou liquide à la matière en fusion pour produire un mélange,
- apport de gouttes du mélange sur une bande d'acier (18 ; 78) au moyen d'un générateur de gouttes (16 ; 70 ; 90 ; 100) avec un tambour extérieur rotatif perforé (72),
- solidification des gouttes du mélange sur la bande d'acier pour former des pastilles, l'au moins une substance supplémentaire sous forme liquide étant ajoutée en mélange à la matière en fusion liquide immédiatement avant le générateur de gouttes ou étant ajoutée en mélange sous forme solide à la matière en fusion liquide en amont d'une unité de broyage et de mélange chauffée (46, 54), le mélange étant agité à l'intérieur du générateur de gouttes (16 ; 70 ; 90 ; 100) jusqu'à immédiatement avant la sortie à travers des buses et des ouvertures du tambour extérieur rotatif (72) au moyen d'un agitateur s'étendant à l'intérieur du générateur de gouttes et le mélange étant agité à l'intérieur d'un canal d'alimentation (74) du générateur de gouttes disposé à l'intérieur du tambour extérieur rotatif.

2. Procédé selon la revendication 1, la première substance étant de l'urée et la substance supplémentaire étant du sulfate d'ammonium, de l'azote, du phosphore, du potassium, du soufre ou de la cire.

3. Procédé selon la revendication 2, les substances supplémentaires ajoutées en mélange étant du sulfate d'ammonium, de l'azote, du phosphore, du potassium, du soufre, de la cire, d'autres additifs et/ou des mélanges de ces substances.

4. Procédé selon au moins l'une quelconque des revendications précédentes, le mélange étant sollicité par des ultrasons immédiatement en amont ou à l'intérieur du générateur de gouttes (16 ; 70 ; 90 ; 100).

5. Procédé selon la revendication 4, la sollicitation du mélange par des ultrasons s'effectuant à l'intérieur d'un canal d'alimentation (74) du générateur de gouttes (16 ; 70 ; 90 ; 100) situé immédiatement en amont du tambour extérieur rotatif (72) ou à l'intérieur du tambour extérieur rotatif (72).

6. Procédé selon au moins l'une quelconque des revendications précédentes, le générateur de gouttes et des conduites tubulaires conduisant au générateur de gouttes pour la première et l'au moins une substance supplémentaire et/ou des pompes et/ou des unités de broyage et de mélange (46 ; 54) situées en amont du générateur de gouttes étant chauffés.

7. Dispositif de fabrication de pastilles constituées de mélanges de plusieurs substances, en particulier de mélanges d'urée, comprenant :
- un dispositif pour fabriquer une matière en fusion liquide d'une première substance,
- des moyens pour ajouter en mélange au moins une substance supplémentaire sous forme solide ou liquide à la matière en fusion pour fabriquer un mélange,
- un générateur de gouttes (16 ; 70 ; 90 ; 100) avec un tambour extérieur rotatif perforé (72), et une bande d'acier (18 ; 78) pour l'apport de gouttes du mélange sur la bande d'acier (18 ; 78), les gouttes du mélange se solidifiant sur la bande d'acier (17 ; 78) pour former des pastilles,
- **caractérisé en ce que** l'au moins une substance supplémentaire sous forme liquide est ajoutée en mélange à la matière en fusion liquide immédiatement avant le générateur de gouttes ou est ajoutée en mélange sous forme solide à la matière en fusion liquide en amont d'une unité de broyage et de mélange chauffée (46, 54) et **en ce**
- **qu'**un agitateur s'étendant à l'intérieur du générateur de gouttes est prévu pour agiter le mélange à l'intérieur du générateur de gouttes (16 ; 70 ; 90 ; 100) jusqu'à immédiatement avant la sortie à travers des buses et des ouvertures du tambour extérieur rotatif (72), le mélange étant agité au moyen de l'agitateur à l'intérieur d'un canal d'alimentation (74) du générateur de gouttes disposé à l'intérieur du tambour extérieur rotatif.

8. Dispositif selon la revendication 7, **caractérisé en ce que** l'agitateur présente une hélice (92 ; 102) disposée de manière rotative à l'intérieur du canal d'alimentation (74).

9. Dispositif selon la revendication 7 ou 8, **caractérisé en ce que** l'agitateur présente une hélice (102) disposée de manière rotative à l'intérieur du canal d'alimentation (74), les arêtes longitudinales (110) de l'hélice (102) étant guidées à faible distance de la paroi interne du canal d'alimentation (74).

10. Dispositif selon la revendication 8 ou 9, **caractérisé en ce que** l'hélice (102) est pourvue de plusieurs éléments d'espacement (112) disposés à chaque fois perpendiculairement et centralement sur l'hélice (102), dont les extrémités libres s'appliquent contre la paroi interne du canal d'alimentation (74).

11. Dispositif selon la revendication 10, **caractérisé en ce que** les éléments d'espacement (112), vus dans la direction longitudinale de l'hélice (102), sont espacés les uns des autres au moins en partie dans une mesure telle qu'ils soient disposés sur des portions d'hélice tournées à chaque fois de 90° les unes par rapport aux autres.

12. Dispositif selon au moins l'une quelconque des revendications 7 à 11, **caractérisé en ce que** l'agitateur présente une hélice (102) disposée de manière rotative à l'intérieur du canal d'alimentation, l'hélice (102) étant réalisée sous forme de bande de matériaux tordue elle-même autour de son axe longitudinal.

13. Dispositif selon au moins l'une quelconque des revendications 7 à 12, **caractérisé en ce qu'**au moins un oscillateur à ultrasons (60 ; 86) est disposé dans le canal d'alimentation (74).

14. Dispositif selon la 1 revendication 13, **caractérisé en ce que** l'au moins un oscillateur à ultrasons (60 ; 86) est disposé immédiatement en amont du tambour extérieur et/ou à l'intérieur du tambour extérieur dans le canal d'alimentation (74).

15. Dispositif selon la revendication 13 ou 14, **caractérisé en ce que** l'oscillateur à ultrasons (60 ; 86) présente une barre oscillante (88) qui est disposée concentriquement au canal d'alimentation (74) et de façon à s'étendre dans celui-ci de sorte qu'entre une paroi interne du canal d'alimentation (74) et la barre oscillante (88) soit formée une fente annulaire.

16. Dispositif selon la revendication 15, **caractérisé en ce qu'**au moins une conduite de distribution (82 ; 84) pour les substances à mettre en pastilles débouche dans la région de la fente annulaire dans le canal d'alimentation.
